# FASCICULE DE BREVET EUROPEEN

(11) **EP 3 299 703 B1**
(45) Date de publication et mention de la délivrance du brevet: **19.06.2019**
(21) Numéro de dépôt: 17184926.8
(22) Date de dépôt: 04.08.2017
(51) Int. Cl.: F21S 41/141, F21S 41/147, F21S 41/26, F21S 41/365

(54) **MODULE D'ÉCLAIRAGE BI-FONCTION EN MATÉRIAU TRANSPARENT**
BIFUNKTIONALES BELEUCHTUNGSMODUL AUS TRANSPARENTEM MATERIAL
DUAL-FUNCTION LIGHTING MODULE MADE OF TRANSPARENT MATERIAL

(30) Priorité: 26.09.2016 FR 1659001
(43) Date de publication de la demande: 28.03.2018
(73) Titulaire: Valeo Vision, 93012 Bobigny Cedex (FR)
(72) Inventeur: GROMFELD, Yves, 49000 ANGERS (FR)

(56) Documents cités:
- EP-A1- 1 666 787
- EP-A1- 1 715 245
- DE-A1-102011 013 211
- DE-A1-102014 205 994
- FR-A1- 2 860 280

## Description

L'invention a trait au domaine de l'éclairage, notamment pour les véhicules automobiles.

Le document de brevet publié EP 1 715 245 A1 divulgue un module d'éclairage formant un faisceau d'éclairage à coupure. Le module comprend un corps en matériau transparent avec une face d'entrée, une première face de réflexion, une deuxième face de réflexion avec un bord de coupure et une face de sortie. Les première et deuxième faces de réflexion forment des dioptres avec l'air ambiant et permettent ainsi aux rayons d'y subir des réflexions par application du principe de réflexion totale. Ce module est intéressant en ce qu'il rassemble, dans le même corps, un collimateur, un réflecteur, une plieuse et une lentille, et assure ainsi une fonction d'éclairage à coupure. Ce module ne permet cependant d'assurer qu'une seule fonction d'éclairage, en l'occurrence une fonction d'éclairage à coupure.

L'invention a pour objectif de pallier au moins un des inconvénients de l'état de la technique susmentionné. Plus particulièrement, l'invention a pour objectif de proposer un module d'éclairage comprenant un corps en matériau transparent ou translucide et qui soit apte à assurer plusieurs fonctions d'éclairage.

L'invention a pour objet un module d'éclairage pour véhicule automobile, le module étant apte à former un faisceau lumineux suivant un axe optique, et comprenant un corps en matériau transparent ou translucide, ledit corps comprenant une première face d'entrée de rayons lumineux ; une première face de réflexion apte à réfléchir vers un ou plusieurs foyers les rayons lumineux provenant de la première face d'entrée ; une face plieuse de réflexion dioptrique s'étendant essentiellement suivant l'axe optique et formant un bord de coupure au niveau du ou des foyers ; une face de sortie des rayons lumineux ; remarquable en ce que le corps comprend, en outre, une deuxième face d'entrée de rayons lumineux, opposée à la première face d'entrée par rapport à l'axe optique, et une deuxième face de réflexion apte à réfléchir vers le bord de coupure les rayons lumineux provenant de la deuxième face d'entrée, le corps formant une cavité avec un fond formé par la face de réflexion dioptrique, ladite cavité étant apte à être traversée par les rayons provenant de la deuxième face de réflexion.

L'axe optique passe avantageusement dans la face plieuse.

Selon un mode avantageux de l'invention, la cavité est située, par rapport à l'axe optique, du même côté que la deuxième face d'entrée et la deuxième face de réflexion.

Selon un mode avantageux de l'invention, la cavité présente une section suivant un plan longitudinal passant par l'axe optique en forme de U.

Selon un mode avantageux de l'invention, la cavité comprend, outre la face de fond, une face avant et une face arrière, ladite face avant étant adjacente à la face de fond au niveau du bord de coupure.

Selon un mode avantageux de l'invention, le module est configuré pour que les rayons lumineux provenant de la deuxième face de réflexion soient aptes à traverser les faces arrière et avant, lesdites faces formant des dioptres. Les dioptres sont formés avec l'air ambiant.

Selon un mode avantageux de l'invention, ledit module s'étend transversalement à l'axe optique, préférentiellement suivant un profil courbe.

Selon un mode avantageux de l'invention, la deuxième face d'entrée et la deuxième face de réflexion s'étendent transversalement à l'axe optique sur une portion seulement de la première face d'entrée et de la première face de réflexion, ladite portion étant préférentiellement comprise entre 20% et 80%.

Selon un mode avantageux de l'invention, le foyer ou les foyers s'étendent ou sont répartis transversalement à l'axe optique le long du bord de coupure.

Selon un mode avantageux de l'invention, la cavité est ouverte vers l'extérieur et contient un matériau d'indice de réfraction inférieur à celui du matériau transparent ou translucide, comme par exemple de l'air ambiant.

Selon un mode avantageux de l'invention, la première face de réflexion et/ou la deuxième face de réflexion présente un profil parabolique. Le profil parabolique de la deuxième face de réflexion peut comprendre un foyer ou plusieurs foyers correspondant au(x) foyer(s) de la première face de réflexion, respectivement.

Selon un mode avantageux de l'invention, la première face d'entrée et/ou la deuxième face d'entrée comprend au moins une optique de collimation, préférentiellement un ou plusieurs collimateurs.

Selon un mode avantageux de l'invention, le ou chacun des collimateurs de la première face d'entrée et/ou de la deuxième face d'entrée présente un axe de collimation, ledit ou chacun desdits axes étant incliné par rapport à un plan perpendiculaire à l'axe optique.

Selon un mode avantageux de l'invention, l'inclinaison de l'axe de collimation ou de chacun des axes de collimation est comprise entre 5° et 40°, préférentiellement entre 7° et 30°, plus préférentiellement entre 8° et 15°.

Selon un mode avantageux de l'invention, la première face d'entrée, la première face de réflexion, la face de réflexion dioptrique et la face de sortie sont configurées pour former un faisceau à coupure horizontale du type code, et la deuxième face d'entrée, la deuxième face de réflexion et la face de sortie sont configurées pour former, en combinaison avec le faisceau à coupure horizontale du type code, un faisceau du type route.

Selon un mode avantageux de l'invention, le module comprend, en outre, une lentille de projection disposée à l'avant, suivant le sens de propagation des rayons, de la face de sortie du corps.

Les mesures de l'invention sont intéressantes en ce qu'elles permettent de réaliser une double fonction d'éclairage avec un seul module. De plus, le module comprend un corps en matériau transparent ou translucide, préférentiellement d'un seul tenant, formant les faces d'entrée, les faces de réflexion et la face de sortie. Les faces de réflexion sont avantageusement dioptriques, c'est-à-dire assurant la réflexion des rayons lumineux par le principe de réflexion totale. C'est notamment le cas pour la face plieuse. De telles faces de réflexion présentent un double avantage, à savoir qu'elles ne requièrent pas l'application d'un revêtement réfléchissant et qu'elles présentent un rendement optique meilleur.

D'autres caractéristiques et avantages de la présente invention seront mieux compris à l'aide de la description et des dessins parmi lesquels :
- La figure 1 est une première représentation en perspective d'un module conforme à l'invention ;
- La figure 2 est une deuxième représentation en perspective du module de la figure 1 ;
- La figure 3 est une vue de côté du module des figures 1 et 2, illustrant le parcours de rayons lumineux suivant une première fonction d'éclairage ;
- La figure 4 est une vue de côté du module des figures 1 et 2, illustrant le parcours de rayons lumineux suivant une deuxième fonction d'éclairage ;
- La figure 5 illustre les images lumineuses des première et deuxième fonctions d'éclairage des figures 3 et 4.

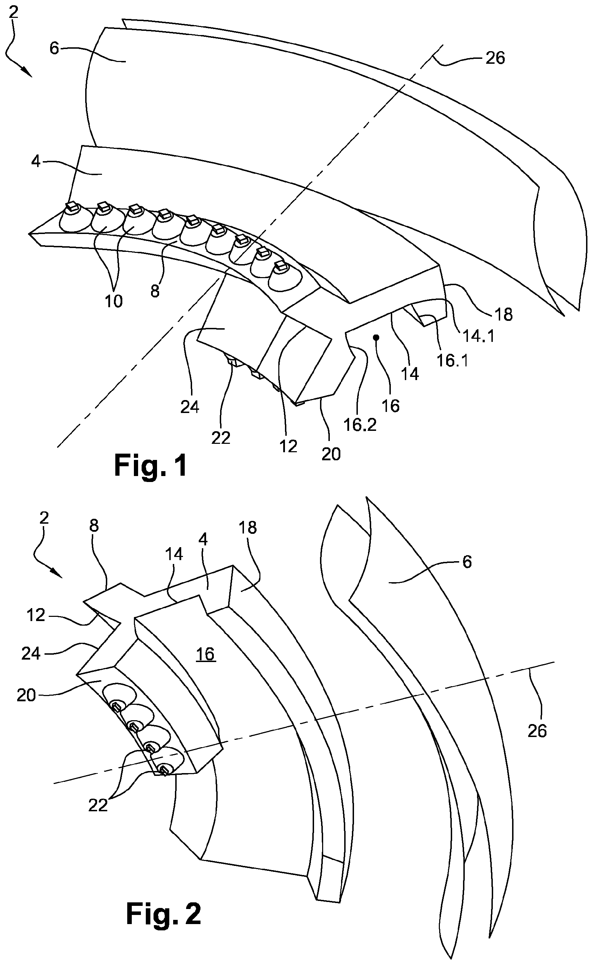

Les figures 1 et 2 illustrent en perspective un module d'éclairage conforme à l'invention. Le module 2 comprend, essentiellement, un corps 4 en matériau transparent ou translucide et une lentille de projection 6. Cette dernière est représentée schématiquement par ses faces d'entrée et de sortie. Aussi elle n'est pas obligatoire. Le corps 4 peut être réalisé en matériau plastique, tel que du polyméthacrylate de méthyle (PMMA), ou en verre.

Le corps 4 comprend une première face d'entrée 8 de rayons lumineux émis par une ou plusieurs sources lumineuses (non représentées). La face d'entrée 8 peut comprendre un ou plusieurs collimateurs 10 en face desquels les sources lumineuses (non représentées) sont disposées. Le corps 4 comprend également une première face de réflexion 12 des rayons provenant de la face d'entrée 8, ladite face réfléchissant lesdits rayons vers une plieuse 14. Celle-ci est formée par une face 14 du corps 4. Plus précisément, le corps 4 forme une cavité 16 dont le fond correspond à la face plieuse 14 en question. La cavité 16 est ouverte vers l'extérieur et est avantageusement vide de matière solide, c'est-à-dire remplie de l'air ambiant. Dans d'autres exemples de réalisation, la cavité peut être remplie d'un matériau autre de l'air, dont l'indice de réfraction est inférieur à celui du matériau transparent ou translucide du corps 4. La face plieuse 14 forme ainsi un dioptre entre la matière transparente ou translucide du corps 4 et l'air dans la cavité 16, l'indice de réfraction de ladite matière transparente ou translucide étant supérieur à celui de l'air. La face plieuse 14 est ainsi apte à réfléchir, par le principe de la réflexion totale, les rayons lumineux provenant de la première face de réflexion 12 et rencontrant cette face. La première face de réflexion 12 est configurée pour réfléchir la majeure partie des rayons lumineux vers le bord avant 14.1 de la face plieuse 14. La première face de réflexion 12 est avantageusement de profil parabolique avec un foyer situé sur le bord de coupure 14.1. Le corps 4 comprend également une face de sortie 18 des rayons lumineux en vue de former le faisceau d'éclairage. La face de sortie 18 peut être conjuguée à la lentille de projection 6.

Le corps comprend également une deuxième face d'entrée 20 avantageusement pourvue d'un ou plusieurs collimateurs 22, similairement à la première face d'entrée 8. La deuxième face d'entrée 20 est opposée à la première face d'entrée 8 par rapport à l'axe optique 26 du module. Le corps 4 comprend également une deuxième face de réflexion 24, également opposée à la première face de réflexion 12 par rapport à l'axe optique 26. Les profils des premières et deuxièmes faces d'entrée et de réflexion peuvent êtres avantageusement au moins essentiellement symétriques par rapport à l'axe optique 26. A la différence des rayons se propageant de la première face de réflexion 12 vers la face plieuse 14 au travers d'une continuité de matière transparente, les rayons provenant de la deuxième de face réflexion 24 et se propageant vers le bord de coupure 14.1 sortent du corps 4 au travers de la face arrière 16.2 (suivant le sens normal de propagation des rayons) de la rainure 16, pour se propager dans ladite rainure 16, et ensuite rentrer à nouveau dans le corps 4 au travers de la face avant 16.1 (suivant le sens normal de propagation des rayons) de ladite rainure 16. Le faisceau ainsi produit ne présente pas de coupure compte tenu que la face 14 ne réfléchit pas les rayons se propageant dans la rainure vers ladite face mais les réfracte. Cette différence est due au fait que l'indice de réfraction de l'air ambiant dans la rainure dans lequel le rayon incident se propage est inférieur à l'indice de réfraction de la matière transparent ou translucide du corps 4.

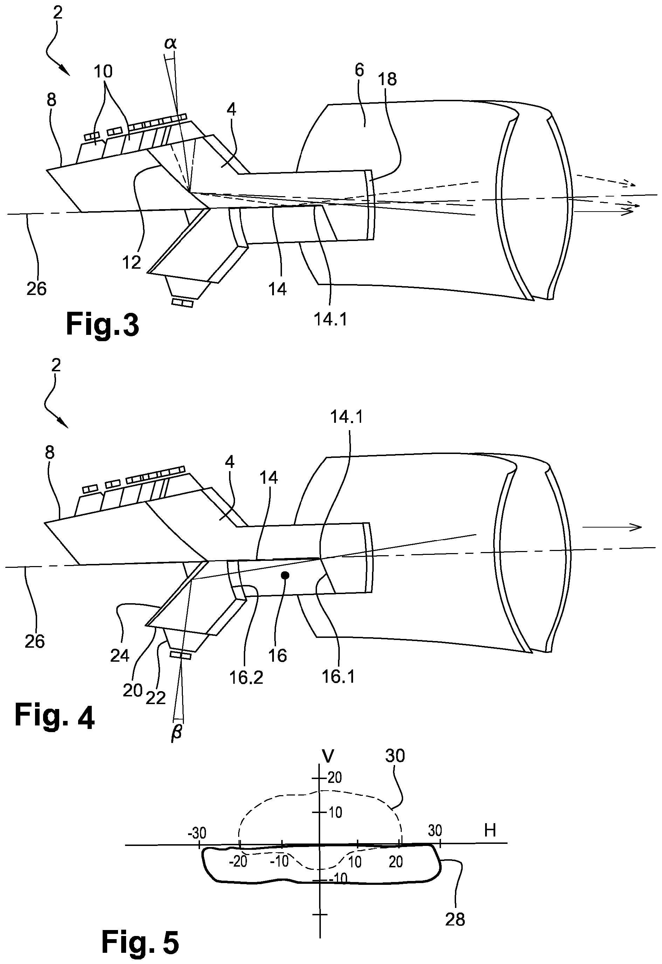

Le parcours des rayons depuis les première et deuxième faces d'entrée sera décrit plus en détail en relation avec les figures 3 et 4.

On peut observer aux figures 1 et 2 que le module 2, en l'occurrence le corps 2 et la lentille de projection 6 s'étendant transversalement à l'axe optique 26, en l'occurrence suivant un arc de cercle. On peut également observer que les deuxièmes faces d'entrée 20 et de réflexion 24 peuvent ne s'étendre, transversalement, que sur une portion des premières faces d'entrée 8 et de réflexion 12. Cette portion peut être comprise entre 20% et 80%. Il est cependant également possible que les étendues des premières et deuxièmes faces d'entrée et de réflexion soient essentiellement identiques.

La figure 3 est une vue de côté du module des figures 1 et 2, illustrant les parcours de trois types de rayons émis par les sources lumineuses disposées en face de la première face d'entrée 8.

Un premier rayon, illustré en trait continu, est réfléchi par la première face de réflexion 12 vers le bord le bord de coupure 14.1 de manière à passer devant ce bord et à n'y subit aucune réflexion. Ce rayon sort du corps 4 par la face de sortie 18 et traverse la lentille de projection 6 pour se propager essentiellement parallèlement à l'axe optique 26.

Un deuxième rayon, illustré en trait interrompu du type pointillé, rencontre la première face de réflexion 12 avec un angle d'incidence plus grand que celui du premier rayon. Il est alors réfléchi vers la face plieuse 14 et y subit une réflexion vers une partie haute du corps 4 et de la lentille de projection 6. Ce rayon sort de la lentille de projection 6 avec une direction inclinée légèrement vers le bas par rapport à l'axe optique 26.

Un troisième rayon, illustré en trait interrompu du type trait d'axe (tiret-point-tiret...), rencontre la première face de réflexion 12 avec un angle d'incidence plus faible que celui du premier rayon. Ce rayon passe devant le bord de coupure 14.1, à distance de ce bord, et sort de la lentille de projection 6 avec une direction inclinée légèrement vers le bas par rapport à l'axe optique 26.

A la lumière de ce qui précède, la face plieuse 14, avec le bord de coupure 14.1, assure bien une coupure, en l'occurrence horizontale, du faisceau lumineux produit. Le principe de fonctionnement d'une plieuse est bien connu en soi de l'homme de métier. Dans le cas présent, la plieuse présente la particularité d'être formée par le dioptre que forme la face 14. Cela signifie que cette face peut rester transparente et ne requiert pas l'application d'une couche réfléchissante, la réflexion s'opérant selon le principe de réflexion totale.

Toujours en relation avec la figure 3, l'axe de collimation du ou des collimateurs 10 peut être incliné vers l'arrière (par rapport au sens de parcours des rayons) d'un angle α avec un plan perpendiculaire à l'axe optique 26. L'angle α peut être compris entre 5° et 40°, préférentiellement entre 5° et 30°, plus préférentiellement entre 7° et 30°, plus préférentiellement encore entre 8° et 15°. Une telle inclinaison permet d'augmenter le rendement optique.

La figure 4 est une vue de côté du module des figures 1 et 2, illustrant le parcours d'un rayon lumineux émis par les sources lumineuses disposées en face de la deuxième face d'entrée 20.

Le rayon émis provenant de la face d'entrée 20 est réfléchi par la deuxième face réfléchissante 24 vers la face arrière 16.2 (par rapport au sens de parcours des rayons) de la rainure 16 pour sortir du corps 4 et traverser au moins partiellement la rainure 16. Le rayon rentre ensuite à nouveau dans le corps par la face avant 16.1 (par rapport au sens de parcours des rayons) de la rainure 16 pour passer au niveau ou au moins à proximité du bord de coupure 14.1 de la face plieuse 14. La deuxième face réfléchissante 24 est avantageusement configurée pour faire converger les rayons vers le bord de coupure 14.1. Les rayons sortent essentiellement de la partie supérieure de la lentille de projection suivant la direction de l'axe optique 26 et forme ainsi un faisceau éclairant majoritairement au-dessus de l'axe optique en question. Ce faisceau peut s'additionner au faisceau à coupure produit par les sources lumineuses de la première face d'entrée 8 (figure 3) en vue de former un faisceau dit route ou plein phare.

Toujours en relation avec la figure 4, l'axe de collimation du ou des collimateurs 22 peut être incliné vers l'arrière (par rapport au sens de parcours des rayons) d'un angle β avec un plan perpendiculaire à l'axe optique 26. L'angle β peut être compris entre 5° et 40°, préférentiellement entre 5° et 30°, plus préférentiellement entre 7° et 30°, plus préférentiellement encore entre 8° et 15°. Une telle inclinaison permet d'augmenter le rendement optique.

La figure 5 illustre de manière schématique les images lumineuses produites par les faisceaux décrits en relation avec les figures 3 et 4. L'axe H correspond à l'horizontale passant par l'axe optique du module. L'axe V correspond à la verticale et passe par l'axe optique du module. Les chiffres (10, 20, 30) sur les axes H et V représentent les niveaux de déviation en degrés par rapport à l'axe optique. On peut observer que l'image lumineuse 28 produite par le faisceau à coupure, détaillé en relation avec la figure 3, assure un éclairage essentiellement exclusivement sous l'axe horizontal alors que l'image lumineuse 30 produite par le faisceau détaillé en relation avec la figure 4 assure un éclairage majoritairement au-dessus de l'axe horizontal. La superposition des images lumineuses 28 et 30 peut correspondre à un éclairage dit route ou plein phare.

Il est à noter que les images lumineuses qui viennent d'être commentées en relation avec la figure 5 peuvent être décalées horizontalement, c'est-à-dire le long de l'axe H, notamment lorsque plusieurs, préférentiellement deux, modules d'éclairage sont configurés pour coopérer en produisant un faisceau d'éclairage combiné, auquel cas il peut être désirable que l'un des modules éclaire davantage d'un côté (latéralement) et que l'autre desdits module éclaire davantage du côté opposé.

## Revendications

1. Module d'éclairage (2) pour véhicule automobile, le module (2) étant apte à former un faisceau lumineux suivant un axe optique (26) et comprenant un corps (4) en matériau transparent ou translucide, ledit corps (4) comprenant :
- une première face d'entrée (8) de rayons lumineux ;
- une première face de réflexion (12) apte à réfléchir vers un ou plusieurs foyers les rayons lumineux provenant de la première face d'entrée (8) ;
- une face plieuse (14) de réflexion dioptrique s'étendant essentiellement suivant l'axe optique (26) et formant un bord de coupure (14.1) au niveau du ou des foyers ;
- une face de sortie (18) des rayons lumineux ;
**caractérisé en ce que** le corps (4) comprend, en outre :
- une deuxième face d'entrée (20) de rayons lumineux, opposée à la première face d'entrée (8) par rapport à l'axe optique (26) ; et
- une deuxième face de réflexion (24) apte à réfléchir vers le bord de coupure (14.1) les rayons lumineux provenant de la deuxième face d'entrée (20) ;
le corps (4) formant une cavité (16) avec un fond formé par la face plieuse (14), ladite cavité (16) étant apte à être traversée par les rayons provenant de la deuxième face de réflexion (24).

2. Module (2) selon la revendication 1, **caractérisé en ce que** la cavité (16) est située, par rapport à l'axe optique (26), du même côté que la deuxième face d'entrée (20) et la deuxième face de réflexion (24).

3. Module (2) selon l'une des revendications 1 et 2, **caractérisé en ce que** la cavité (16) présente une section suivant un plan longitudinal passant par l'axe optique (26) en forme de U.

4. Module (2) selon l'une des revendications 1 à 3, **caractérisé en ce que** la cavité (16) comprend, outre la face de fond, une face avant (16.1) et une face arrière (16.2), ladite face avant (16.1) étant adjacente à la face de fond (14) au niveau du bord de coupure (14.1).

5. Module (2) selon la revendication 4, **caractérisé en ce que** ledit module est configuré pour que les rayons lumineux provenant de la deuxième face de réflexion (24) soient aptes à traverser les faces arrière (16.2) et avant (16.1) de la cavité (16), lesdites faces (16.1, 16.2) formant des dioptres.

6. Module (2) selon l'une des revendications 1 à 5, **caractérisé en ce que** ledit module (2) s'étend transversalement à l'axe optique (26), préférentiellement suivant un profil courbe.

7. Module (2) selon la revendication 6, **caractérisé en ce que** la deuxième face d'entrée (20) et la deuxième face de réflexion (24) s'étendent transversalement à l'axe optique (26) sur une portion seulement de la première face d'entrée (8) et de la première face de réflexion (12), ladite portion étant préférentiellement comprise entre 20% et 80%.

8. Module (2) selon l'une des revendications 6 et 7, **caractérisé en ce que** le ou les foyers s'étendent transversalement à l'axe optique (26) le long du bord de coupure (14.1).

9. Module (2) selon l'une des revendications 1 à 8, **caractérisé en ce que** la cavité (16) est ouverte vers l'extérieur et contient un matériau d'indice de réfraction inférieur à celui du matériau transparent ou translucide.

10. Module (2) selon l'une des revendications 1 à 9, **caractérisé en ce que** la première face de réflexion (12) et/ou la deuxième face de réflexion (24) présente un profil parabolique.

11. Module (2) selon l'une des revendications 1 à 9, **caractérisé en ce que** la première face d'entrée (8) et/ou la deuxième face d'entrée (20) comprend au moins une optique de collimation (10, 22), préférentiellement un ou plusieurs collimateurs (10, 22).

12. Module (2) selon la revendication 11, **caractérisé en ce que** le ou chacun des collimateurs (10, 22) de la première face d'entrée (8) et/ou de la deuxième face d'entrée (20) présente un axe de collimation, ledit ou chacun desdits axes étant incliné par rapport à un plan perpendiculaire à l'axe optique (26).

13. Module (2) selon la revendication 12, **caractérisé en ce que** l'inclinaison (α, β) de l'axe de collimation ou de chacun des axes de collimation est comprise entre 5° et 40°, préférentiellement entre 7° et 30°, plus préférentiellement entre 8° et 15°.

14. Module (2) selon l'une des revendications 1 à 13, **caractérisé en ce que** la première face d'entrée (8), la première face de réflexion (12), la face plieuse (14) et la face de sortie (18) sont configurées pour former un faisceau à coupure horizontale du type code, et la deuxième face d'entrée (20), la deuxième face de réflexion (24) et la face de sortie (18) sont configurées pour former, en combinaison avec le faisceau à coupure horizontale du type code, un faisceau du type route.

15. Module (2) selon l'une des revendications 1 à 14, **caractérisé en ce qu'**il comprend, en outre, une lentille de projection (6) disposée à l'avant, suivant le sens de propagation des rayons, de la face de sortie (18) du corps (2).

## Patentansprüche

1. Beleuchtungsmodul (2) für ein Kraftfahrzeug, wobei das Modul (2) geeignet ist, ein Lichtbündel entlang einer optischen Achse (26) zu bilden, und einen Körper (4) aus durchsichtigem oder durchscheinendem Material umfasst, wobei der Körper (4) umfasst:
- eine erste Eintrittsfläche (8) für Lichtstrahlen;
- eine erste Reflexionsfläche (12), die geeignet ist, die von der ersten Eintrittsfläche (8) kommenden Lichtstrahlen in Richtung eines oder mehrerer Brennpunkte zu reflektieren;
- eine dioptrische Ablenkungsreflexionsfläche (14), die sich im Wesentlichen entlang der optischen Achse (26) erstreckt und einen Begrenzungsrand (14.1) an dem oder den Brennpunkten bildet;
- eine Austrittsfläche (18) der Lichtstrahlen;
**dadurch gekennzeichnet, dass** der Körper (4) außerdem umfasst:
- eine zweite Eintrittsfläche (20) für Lichtstrahlen, die der ersten Eintrittsfläche (8) in Bezug auf die optische Achse (26) gegenüberliegt; und
- eine zweite Reflexionsfläche (24), die geeignet ist, die von der zweiten Eintrittsfläche (20) kommenden Lichtstrahlen in Richtung des Begrenzungsrandes (14.1) zu reflektieren;
wobei der Körper (4) einen Hohlraum (16) mit einem von der Ablenkungsfläche (14) gebildeten Boden bildet, wobei der Hohlraum (16) von den Strahlen durchquert werden kann, die von der zweiten Reflexionsfläche (24) kommen.

2. Modul (2) nach Anspruch 1, **dadurch gekennzeichnet, dass** sich der Hohlraum (16) in Bezug auf die optische Achse (26) auf derselben Seite wie die zweite Eintrittsfläche (20) und die zweite Reflexionsfläche (24) befindet.

3. Modul (2) nach einem der Ansprüche 1 und 2, **dadurch gekennzeichnet, dass** der Hohlraum (16) entlang einer durch die optische Achse (26) verlaufenden Längsebene einen U-förmigen Querschnitt aufweist.

4. Modul (2) nach einem der Ansprüche 1 bis 3, **dadurch gekennzeichnet, dass** der Hohlraum (16), außer der Bodenfläche, eine vordere Fläche (16.1) und eine hintere Fläche (16.2) umfasst, wobei die vordere Fläche (16.1) der Bodenfläche (14) am Begrenzungsrand (14.1) benachbart ist.

5. Modul (2) nach Anspruch 4, **dadurch gekennzeichnet, dass** das Modul so gestaltet ist, dass die von der zweiten Reflexionsfläche (24) kommenden Lichtstrahlen in der Lage sind, die hintere (16.2) und die vordere (16.1) Fläche des Hohlraums (16) zu durchqueren, wobei die Flächen (16.1, 16.2) Diopter bilden.

6. Modul (2) nach einem der Ansprüche 1 bis 5, **dadurch gekennzeichnet, dass** sich das Modul (2) quer zur optischen Achse (26) erstreckt, vorzugsweise entlang eines gekrümmten Profils.

7. Modul (2) nach Anspruch 6, **dadurch gekennzeichnet, dass** sich die zweite Eintrittsfläche (20) und die zweite Reflexionsfläche (24) nur auf einem Abschnitt der ersten Eintrittsfläche (8) und der ersten Reflexionsfläche (12) quer zur optischen Achse (26) erstrecken, wobei dieser Abschnitt vorzugsweise zwischen 20 % und 80 % beträgt.

8. Modul (2) nach einem der Ansprüche 6 und 7, **dadurch gekennzeichnet, dass** sich der oder die Brennpunkte quer zur optischen Achse (26) entlang des Begrenzungsrandes (14.1) erstrecken.

9. Modul (2) nach einem der Ansprüche 1 bis 8, **dadurch gekennzeichnet, dass** der Hohlraum (16) nach außen offen ist und ein Material mit einem Brechungsindex enthält, der kleiner als derjenige des durchsichtigen oder durchscheinenden Materials ist.

10. Modul (2) nach einem der Ansprüche 1 bis 9, **dadurch gekennzeichnet, dass** die erste Reflexionsfläche (12) und/oder die zweite Reflexionsfläche (24) ein parabolisches Profil aufweisen.

11. Modul (2) nach einem der Ansprüche 1 bis 9, **dadurch gekennzeichnet, dass** die erste Eintrittsfläche (8) und/oder die zweite Eintrittsfläche (20) wenigstens eine Kollimationsoptik (10, 22), vorzugsweise einen oder mehrere Kollimatoren (10, 22) aufweisen.

12. Modul (2) nach Anspruch 11, **dadurch gekennzeichnet, dass** der oder jeder der Kollimatoren (10, 22) der ersten Eintrittsfläche (8) und/oder der zweiten Eintrittsfläche (20) eine Kollimationsachse aufweist, wobei die oder jede dieser Achsen in Bezug auf eine zur optischen Achse (26) senkrechte Ebene geneigt ist.

13. Modul (2) nach Anspruch 12, **dadurch gekennzeichnet, dass** die Neigung (α, β) der Kollimationsachse oder jeder der Kollimationsachsen zwischen 5° und 40°, vorzugsweise zwischen 7° und 30°, stärker bevorzugt zwischen 8° und 15° beträgt.

14. Modul (2) nach einem der Ansprüche 1 bis 13, **dadurch gekennzeichnet, dass** die erste Eintrittsfläche (8), die erste Reflexionsfläche (12), die Ablenkungsfläche (14) und die Austrittsfläche (18) dafür ausgebildet sind, ein Lichtbündel mit horizontaler Hell-Dunkel-Grenze vom Typ Abblendlicht zu bilden, und die zweite Eintrittsfläche (20), die zweite Reflexionsfläche (24) und die Austrittsfläche (18) dafür ausgebildet sind, in Kombination mit dem Lichtbündel mit horizontaler Hell-Dunkel-Grenze vom Typ Abblendlicht ein Lichtbündel vom Typ Fernlicht zu bilden.

15. Modul (2) nach einem der Ansprüche 1 bis 14, **dadurch gekennzeichnet, dass** es außerdem eine Projektionslinse (6) umfasst, die in der Ausbreitungsrichtung der Strahlen vor der Austrittsfläche (18) des Körpers (2) angeordnet ist.

## Claims

1. Lighting module (2) for a motor vehicle, the module (2) being able to form a light beam along an optical axis (26), and comprising a body (4) made of transparent or translucent material, the said body (4) comprising:
- a first light rays input surface (8);
- a first reflection surface (12) able to reflect to one or more focuses the light rays coming from the first input surface (8);
- a dioptric reflection folder surface (14) essentially extending along the optical axis (26) and forming a cut-off edge (14.1) at the level of the focus or focuses;
- a light rays output surface (18);
**characterized in that** the body (4) furthermore comprises:
- a second light rays input surface (20), opposite to the first input surface (8) with respect to the optical axis (26), and
- a second reflection surface able to reflect the light rays coming from the second input surface (20) towards the cut-off edge (14.1),
the body (4) forming a cavity (16) with a bottom formed by the folder surface (14), the said cavity (16) being able to be traversed by the rays coming from the second reflection surface (24).

2. Module (2) according to Claim 1, **characterized in that** the cavity (16) is located, with respect to the optical axis (26), on the same side as the second input surface (20) and the second reflection surface (24).

3. Module (2) according to one of Claims 1 and 2, **characterized in that** the cavity (16) has a U-shaped cross-section in a longitudinal plane passing through the optical axis (26).

4. Module (2) according to one of Claims 1 to 3, **characterized in that** the cavity (16) comprises, in addition to the bottom surface, a front surface (16.1) and a rear surface (16.2), the said front surface (16.1) being adjacent to the bottom surface (14) at the level of the cut-off edge (14.1).

5. Module (2) according to Claim 4, **characterized in that** the said module is configured such that the light rays coming from the second reflection surface (24) are able to pass through the rear (16.2) and front (16.1) surfaces of the cavity (16), the said surfaces (16.1, 16.2) forming diopters.

6. Module (2) according to one of Claims 1 to 5, **characterized in that** the said module (2) extends transversely with respect to the optical axis (26), preferably following a curved profile.

7. Module (2) according to Claim 6, **characterized in that** the second input surface (20) and the second reflection surface (24) extend transversely with respect to the optical axis (26) over only a portion of the first input surface (8) and of the first reflection surface (12), the said portion preferably being between 20% and 80%.

8. Module (2) according to one of Claims 6 and 7, **characterized in that** the focus or focuses extend transversely with respect to the optical axis (26) along the cut-off edge (14.1).

9. Module (2) according to one of Claims 1 to 8, **characterized in that** the cavity (16) is open towards the exterior and contains a material having a refractive index less than that of the transparent or translucent material.

10. Module (2) according to one of Claims 1 to 9, **characterized in that** the first reflection surface (12) and/or the second reflection surface (24) has a parabolic profile.

11. Module (2) according to one of Claims 1 to 9, **characterized in that** the first input surface (8) and/or the second input surface (20) comprises at least one optical collimating element (10, 22), preferably one or more collimators (10, 22).

12. Module (2) according to Claim 11, **characterized in that** the collimator or each of the collimators (10, 22) of the first input surface (8) and/or of the second input surface (20) has a collimation axis, the said axis or each of the said axes being inclined with respect to a plane perpendicular to the optical axis (26) .

13. Module (2) according to Claim 12, **characterized in that** inclination (α, β) of the collimation axis or each of the collimation axes is between 5° and 40°, preferably between 7° and 30°, more preferably between 8° and 15°.

14. Module (2) according to one of Claims 1 to 13, **characterized in that** the first input surface (8), the first reflection surface (12), the folder surface (14) and the output surface (18) are configured in order to form a beam with a horizontal cut-off of the low beam type, and the second input surface (20), the second reflection surface (24) and the output surface (18) are configured for forming, in combination with the beam having a horizontal cut-off of the low beam type, a high beam.

15. Module (2) according to one of Claims 1 to 14, **characterized in that** it comprises moreover a projection lens (6) disposed at the front, according to the direction of propagation of the rays, of the output surface (18) of the body (2).
